# DEMANDE DE BREVET EUROPEEN

(11) **EP 3 104 139 A1**
(43) Date de publication de la demande: **14.12.2016**
(21) Numéro de dépôt: 15192638.3
(22) Date de dépôt: 02.11.2015
(51) Int. Cl.: G01F 11/08, B65D 75/58

(54) **DISPOSITIF DE DISTRIBUTION D'UNE DOSE DE FLUIDE COMPRENANT UNE POCHE SOUPLE**

(30) Priorité: 09.06.2015 FR 1555259
(71) Demandeur: Société Nour, 75015 Paris (FR)
(72) Inventeur: NOURMAMODE, Franck, 92370 CHAVILLE (FR); DAUTREMENT, Jean Christophe, 27620 Gasny (FR)
(74) Mandataire: Cabinet Plasseraud

(57) **Abrégé**

La présente invention concerne un dispositif de distribution d'une dose d'un fluide comprenant une poche souple destinée à contenir le fluide, ladite poche souple :
- étant définie en coupe longitudinale par une base, une extrémité supérieure opposée à la base et au moins deux côtés latéraux, et
- comprenant un compartiment principal, ledit compartiment principal présentant un volume V1 et une ouverture O1 permettant d'introduire le fluide dans le compartiment principal et un compartiment secondaire, ledit compartiment secondaire présentant un volume V2 inférieur au volume V1 et une ouverture 02 permettant de délivrer le fluide du compartiment secondaire,

le compartiment secondaire étant séparé du compartiment principal par une ligne de soudure présentant une partie proximale par rapport à la base de la poche et au moins un bord libre, ladite ligne de soudure permettant de faire communiquer le fluide du compartiment principal vers le compartiment secondaire par une pression exercée sur le compartiment principal puis de maintenir ledit fluide dans le compartiment secondaire lorsqu' aucune pression n'est exercée sur le compartiment principal.

## Description

La présente invention concerne un dispositif de distribution d'une dose d'un fluide comprenant une poche souple.

L'invention concerne également un procédé de remplissage dudit dispositif de distribution ainsi qu'un procédé de délivrance du fluide dudit dispositif de distribution.

De nos jours, les possibilités de distribution d'un volume donné (ou dose) d'un fluide sont multiples et variées.

On peut citer par exemple des dispositifs rigides (comprenant un gaz propulseur ou bien une pompe par exemple) qui permettent de délivrer une quantité de fluide. Cependant, la plupart de ces dispositifs nécessitent un accessoire complémentaire qui peut être une cuillère doseuse, voire un bouchon doseur, dans lequel il faut déposer le produit à distribuer.

De plus, en fonction de la nature du produit à doser, sa manipulation peut s'avérer dangereuse. Enfin, la présence de ces accessoires entraine un coût supplémentaire et nécessite le stockage et le nettoyage de ces derniers compliquant ainsi le dosage du fluide.

On peut citer également l'existence de poche souple à compartiment unique comprenant un fluide à délivrer. Là encore, ce type de dispositif nécessite l'utilisation d'accessoires complémentaires afin de réaliser le dosage avec tous les inconvénients précités.

Enfin, il est de plus en plus recherché dans de nombreuses industries (chimique, biologique, alimentaire, cosmétique, pharmaceutique...) de disposer de produits de plus en plus concentrés afin de réduire au maximum le volume et donc le poids des emballages de produits. Il est donc important de pouvoir délivrer simplement une dose d'un produit concentré là encore en toute sécurité.

Il serait donc intéressant de disposer d'un dispositif de distribution d'une dose d'un fluide maniable, simple à utiliser et à fabriquer et également apte et adapté à distribuer une dose d'un fluide en toute sécurité.

Or, les présents inventeurs ont trouvé qu'un dispositif comprenant deux compartiments séparés par une ligne de soudure ayant une structure particulière permettant le passage d'un fluide d'un compartiment à un autre permettait de répondre à ces exigences.

Ainsi, un premier objet de l'invention est un dispositif de distribution d'une dose d'un fluide comprenant une poche souple destinée à contenir le fluide, ladite poche souple :
- étant définie en coupe longitudinale par une base, une extrémité supérieure opposée à la base et au moins deux côtés latéraux, et
- comprenant un compartiment principal, ledit compartiment principal présentant un volume V1 et une ouverture O1 permettant d'introduire le fluide dans le compartiment principal et un compartiment secondaire, ledit compartiment secondaire présentant un volume V2 inférieur au volume V1 et une ouverture 02 permettant de délivrer le fluide du compartiment secondaire,
le compartiment secondaire étant séparé du compartiment principal par une ligne de soudure présentant une partie proximale par rapport à la base de la poche et au moins un bord libre, ladite ligne de soudure, permettant de faire communiquer le fluide du compartiment principal vers le compartiment secondaire par une pression exercée sur le compartiment principal puis de maintenir ledit fluide dans le compartiment secondaire lorsqu' aucune pression n'est exercée sur le compartiment principal.

Dans la suite de la description, la poche est décrite en coupe longitudinale dans un plan (XY) et est définie par une base, une extrémité supérieure et au moins deux cotés latéraux.

La poche selon l'invention, en coupe longitudinale, a donc une forme polygonale. Elle peut donc être carrée, rectangulaire ou triangulaire (l'extrémité supérieure étant représentée par un point dans ce cas).

La poche est également définie par une largeur L et une hauteur H.

Selon l'invention, par fluide, on entend tout type de matière permettant de s'écouler.

On peut citer par exemple, des fluides dans divers domaines tels que le domaine chimique, biologique, alimentaire, cosmétique et pharmaceutique.

Ainsi, selon un mode de réalisation, le fluide est choisi dans le groupe consistant en un liquide, une pâte, un gel et une composition pulvérulente. On peut citer par exemple des sirops alimentaires, des lessives, des engrais, des détergents, des peintures, du sucre, du sel, de la farine, des épices, de la semoule.

Selon l'invention, la poche a une largeur L et une hauteur H et comprend un compartiment principal présentant un volume V1 et une ouverture O1 permettant d'introduire le fluide dans le compartiment principal et un compartiment secondaire présentant un volume V2 inférieur au volume V1 et une ouverture 02 permettant de délivrer le fluide du compartiment secondaire.

L'homme du métier saura trouver les dimensions de la poche adaptées au volume du fluide à contenir et à délivrer.

Les valeurs sont données par la suite uniquement à titre indicatif et ne sont donc pas limitatives.

Selon un mode de réalisation, la largeur L de la poche est comprise entre 5 et 80cm, de préférence entre 8 et 25cm, et de manière encore plus préférée entre 12 et 20 cm.

Selon un mode de réalisation, la hauteur H de la poche est comprise entre 5 et 80cm, de préférence entre 12 et 35cm, et de manière encore plus préférée entre 15 et 25cm.

Selon un mode de réalisation le volume V1 du compartiment principal est compris entre 100mL et 2000mL, de préférence entre 200 et 750mL, et de manière encore plus préférée entre 250 et 500ml.

Selon un mode de réalisation, le volume V2 du compartiment secondaire est compris entre 3 et 100mL, de préférence entre 5 et 50mL, et de manière encore plus préférée entre 10 et 30mL.

Selon un mode de réalisation particulier, le volume de la dose à distribuer correspond à V2.

Le compartiment principal de la poche comprend une ouverture O1 nécessaire à l'introduction du fluide dans la poche.

Selon la géométrie de la poche, l'ouverture O1 peut se trouver sur l'extrémité supérieure de la poche, sur un côté de la poche ou sur la base. Cependant, pour des questions pratiques, on préférera privilégier une ouverture au niveau de l'extrémité supérieure de la poche.

On peut également envisager plusieurs ouvertures permettant l'introduction du fluide dans le compartiment principal.

Selon un mode de réalisation, le ratio entre la largeur L de la poche et l'ouverture O1 du compartiment principal est compris entre 1,2 et 10, de préférence entre 2 et 5.

Selon l'invention, la poche est réalisée en un matériau permettant de lui conférer de la souplesse.

Par ailleurs, l'homme du métier saura adapter la nature du matériau en fonction de la nature du fluide destiné à être contenu dans la poche du dispositif.

Ainsi selon un mode de réalisation, la poche est un film monocouche ou multicouche comprenant un matériau choisi dans le groupe consistant en le polypropylène, le polyester, le polyéthylène, le polyamide, l'aluminium (en feuille ou en paillette) et le papier kraft, et leurs mélanges.

Selon un autre mode de réalisation, le film comprend un mélange de matériaux.

Selon un mode de réalisation la poche est réalisée en un film multicouche choisi dans le groupe consistant en du polyéthylène téréphtalate/du polyéthylène (PET/PE); du polyéthylène téréphtalate/du polyester métallisé/ du polyéthylène (PET/PETMET//PE) ; du polyéthylène téréphtalate/de l'aluminium/ du polyéthylène (PET/ALU/PE) ; du polyéthylène téréphtalate/du polyamide/ du polyéthylène (PET/PA/PE) ; du polyéthylène téréphtalate/du polyamide/ polypropylène stérilisable (PET/PA/CPP) et du papier kraft/ de l'aluminium/ du polyéthylène (KRAFT/ ALU/ PE).

Les films peuvent être obtenus par extrusion, par co-extrusion, ou par complexage (on parle alors de lamination).

Selon un mode de réalisation, le film a une épaisseur comprise entre 10 et 300µm, de préférence entre 60 et 150µm.

Selon un mode de réalisation, les poches sont constituées de deux feuilles de forme polygonale, de préférence rectangulaires accolées l'une à l'autre et sont définies par une base, une extrémité supérieure opposée à la base et au moins deux cotés latéraux.

On pourra cependant envisager une poche comprenant une seule feuille pliée bords à bords (appelé film dossé). La poche sera formée en solidarisant les bords mis en regard l'un par rapport à l'autre.

On peut également envisager une poche comprenant une seule feuille faite en extrusion appelée gaine. Dans ce cas, une soudure est réalisée pour faire le fond et l'autre extrémité reste ouverte pour le remplissage.

Selon un mode de réalisation, les feuilles sont solidarisées entre elles, par soudure par exemple, au niveau de leurs bases, de leurs côtés respectifs, et de leurs extrémités de manière à laisser :
- une première ouverture correspondant à l'ouverture O1 du compartiment principal de la poche, de préférence au niveau de l'extrémité supérieure afin de permettre l'introduction du fluide dans ladite poche, et
- une seconde ouverture correspondant à l'ouverture 02 du compartiment secondaire de la poche, de préférence au niveau d'un côté afin de permettre la délivrance du fluide.

Selon un mode de réalisation, les ouvertures O1 et O2 comprennent des moyens de fermeture qui peuvent être amovibles ou non.

Selon un mode de réalisation, la base a la forme d'un soufflet permettant d'améliorer la stabilité du dispositif lorsque ce dernier est disposé sur un support.

Selon l'invention, la ligne de soudure, délimitant le compartiment principal du compartiment secondaire peut avoir différentes configurations à condition de permettre :
- la circulation du fluide du compartiment principal vers le compartiment secondaire lorsqu'une pression est appliquée sur le compartiment principal; puis
- le maintien du fluide dans le compartiment secondaire sans que ce dernier ne retourne dans le compartiment principal lorsqu'aucune pression n'est exercée sur le compartiment principal.

La ligne de soudure peut donc être soit continue ou discontinue à condition de présenter au moins un bord libre permettant la circulation du fluide du compartiment principal vers le compartiment secondaire.

La ligne de soudure peut être droite et/ou courbe.

Selon l'invention, la ligne de soudure comprend une partie proximale par rapport à la base. Par « partie proximale par rapport à la base », on entend la partie (point ou segment) de la ligne de soudure qui est la plus proche de la base de la poche.

Selon un mode de réalisation particulier, le bord libre de la ligne de soudure est situé au-dessus de la partie proximale de la ligne de soudure par rapport à la base, c'est-à-dire que la distance entre la base et la partie proximale de la ligne de soudure par rapport à la base est inférieure à la distance entre la base et le bord libre de la soudure.

Ainsi, selon un mode de réalisation,
- la ligne de soudure a un bord supérieur en contact avec l'extrémité supérieure de la poche et un bord inférieur en contact avec un côté de la poche ; et
- la ligne de soudure est discontinue et présente un bord libre distal par rapport à la base et un bord libre proximal par rapport à base, les deux bords libres définissant un orifice d'une largeur L_{orifice} permettant la circulation du fluide du compartiment principal vers le compartiment secondaire lorsqu'une pression est appliquée sur le compartiment principal.

Par « bord libre proximal de la base », on entend le bord libre le plus proche de la base.

Par « bord libre distal de la base », on entend le bord libre le plus éloigné de la base.

Selon ce mode de réalisation, la ligne de soudure présente un bord libre proximal par rapport à la base situé au-dessus de la partie proximale de la ligne de soudure par rapport à la base.

Selon un mode de réalisation, le ratio entre la distance séparant le bord supérieur de la ligne de soudure et la partie proximale de la ligne de soudure par rapport à la base (h1) et la distance séparant le bord libre proximal de la partie proximale par rapport à la base (h2) est compris entre 1,5 et 10, de préférence entre 3 et 5.

Selon un autre mode de réalisation,
- la ligne de soudure est continue, et
- la ligne de soudure a un bord supérieur et/ou un bord inférieur qui n'est pas en contact respectivement avec l'extrémité supérieure de la poche et/ou un côté de la poche formant ainsi au moins un orifice d'une largeur L_{orifice}.

Selon ce mode de réalisation, la ligne de soudure comprend un bord libre qui est l'extrémité de la soudure qui n'est pas en contact avec l'extrémité supérieure de la poche et/ou le coté de la poche. La distance (définie perpendiculairement) séparant le bord libre de la ligne de soudure du côté de la poche définit l'orifice de largeur L_{orifice}.

Selon un mode de réalisation combiné au précédent, le bord libre de la ligne de soudure est situé au-dessus de la partie proximale de la ligne de soudure par rapport à la base.

Selon un mode de réalisation, le ratio entre le bord supérieur de la ligne de soudure et la partie proximale de la ligne de soudure par rapport à la base (h1) et la distance séparant le bord libre de la ligne de soudure de la partie proximale par rapport à la base (h2) est compris entre 1,5 et 10, de préférence entre 3 et 5.

Que ce soit dans le mode de réalisation dans lequel la ligne de soudure est continue ou discontinue, l'orifice permettant la circulation du fluide du compartiment principal vers le compartiment secondaire doit être de dimension adaptée afin que le fluide ne circule pas entre les deux compartiments lorsqu'aucune pression n'est exercée sur le compartiment principal.

Ainsi, selon un mode de réalisation, l'orifice L_{orifice} a une largeur comprise entre 2mm et 40mm, de préférence entre 10mm et 30mm. L'homme du métier saura adapter la largeur de l'orifice notamment en fonction de la viscosité du fluide.

Selon un autre mode de réalisation, le ratio entre la largeur de l'orifice L_{orifice} et la distance (h2) séparant le bord libre proximal de la ligne de soudure par rapport à la base et la partie proximale de la ligne de soudure par rapport à la base est compris entre 0,5 et 5, de préférence entre 0,8 et 1,2.

Ce ratio sera notamment adapté en fonction de la nature du matériau constitutif de la poche ainsi que de la viscosité du fluide à délivrer.

L'ouverture O1 est dotée de moyens de fermeture qui permettent la fermeture hermétique définitive ou non après remplissage du fluide dans le compartiment principal. L'ouverture 02 est dotée également de moyens de fermeture amovibles ou non permettant la fermeture hermétique du compartiment secondaire.

Par ailleurs, lorsque le compartiment principal de la poche est rempli avec un fluide et qu'une pression est exercée sur le compartiment principal afin de faire circuler le fluide du compartiment principal vers le compartiment secondaire, l'ouverture O1 du compartiment principal et l'ouverture 02 du compartiment secondaire doivent nécessairement être fermées hermétiquement.

Pour les ouvertures O1 et 02, on peut citer des moyens de fermeture choisis dans le groupe consistant en une soudure, un ou plusieurs zip, un système mécanique de type pince, un bouchon à visser, un bouchon à clipser, un bouchon push-pull, un bouchon capsule, une canule à couper, une pointe à couper, une feuille métallique ou plastique destinée à être percé par une paille et une valve.

Selon un mode de réalisation particulier, l'ouverture O1 est fermée par une soudure et l'ouverture 02 est fermée par un bouchon.

Selon un autre mode de réalisation particulier, lorsque le dispositif de l'invention a été utilisé et que l'utilisateur souhaite remplir à nouveau le compartiment principal avec du fluide par l'ouverture O1 lorsque ce dernier est vide par exemple, l'ouverture O1 est dotée de moyens de fermeture amovibles, un bouchon par exemple ou un ou plusieurs zip, permettant de remplir à nouveau le compartiment principal puis de le refermer hermétiquement.

Afin de faciliter sa prise en main et son utilisation, le dispositif de l'invention peut comprendre en outre une poignée, située de préférence sur un des côtés latéraux de la poche.

La présente invention est décrite pour un dispositif comprenant une poche unique comportant un compartiment principal et un compartiment secondaire.

Cependant, le dispositif de l'invention peut comprendre plusieurs poches souples, de préférence deux poches souples, chacune d'elles étant séparées hermétiquement et comportant un compartiment principal et un compartiment secondaire avec les caractéristiques techniques décrites précédemment permettant ainsi de délivrer deux doses, éventuellement différentes, de deux fluides différents.

Un autre objet de l'invention est un procédé de distribution d'une dose d'un fluide comprenant les étapes consistant en :
(i) Fournir une poche définie en coupe longitudinale par une base, une extrémité supérieure opposée à la base et au moins deux côtés latéraux, la dite poche comprenant au moins une feuille; et
(ii) Réaliser une ligne de soudure dans la poche de l'étape (i) délimitant un compartiment principal ayant un volume V1 et une ouverture O1 et un compartiment secondaire ayant un volume V2 et une ouverture 02, la dite ligne de soudure présentant une partie proximale par rapport à la base de la poche et au moins un bord libre et permet de faire communiquer le fluide du compartiment principal vers le compartiment secondaire par une pression exercée sur le compartiment principal puis de maintenir ledit fluide dans le compartiment secondaire lorsqu' aucune pression n'est exercée sur le compartiment principal.

La poche utilisée dans l'étape (i) peut comprendre une ou plusieurs soudures en fonction du nombre de feuilles constitutifs de la poche.

Selon un mode de réalisation, la poche de l'étape (i) comprend déjà les ouvertures O1 et 02.

Dans un autre mode de réalisation, la poche de l'étape (i) ne comprend pas les ouvertures O1 et O2 et les ouvertures O1 et O2 sont réalisées avant ou après l'étape (ii), par découpage par exemple.

Toutes les caractéristiques techniques décrites pour le dispositif s'appliquent également pour le procédé décrit ci-dessus.

Un autre objet de l'invention est un procédé de remplissage d'un fluide dans un dispositif de distribution comprenant les étapes consistant en :
- Fournir un dispositif de distribution d'une dose tel que décrit précédemment comprenant une ouverture O1 dans le compartiment principal et une ouverture 02 dans le compartiment secondaire ou tel que fabriqué selon le procédé décrit précédemment ;
- Remplir la poche avec un fluide par l'ouverture O1 du compartiment principal ;
- Fermer hermétiquement l'ouverture O1 du compartiment principal ; et
- Eventuellement fermer hermétiquement l'ouverture 02 du compartiment secondaire.

Selon l'invention, il n'y a pas de limitations particulières quant au niveau de remplissage du fluide dans le compartiment principal du fait de la structure spécifique de la ligne de soudure. En effet, ce dernier peut se trouver au-dessus du bord libre ou d'un des bords libre de la ligne de soudure sans que le fluide ne circule du compartiment principal vers le compartiment secondaire en l'absence de pression exercée sur le compartiment principal.

Selon un mode de réalisation, le ratio entre la distance séparant la base du niveau de fluide et la hauteur H de la poche est compris entre 0,3 et 0,9, de préférence entre 0,5 et 0,7.

Enfin, un autre objet de la présente invention est un procédé de distribution d'une dose d'un fluide comprenant les étapes consistant en :
- Fournir un dispositif de distribution rempli tel que décrit précédemment mais dont l'ouverture O1 du compartiment principal renfermant un fluide et l'ouverture 02 du compartiment secondaire sont fermées hermétiquement;
- Exercer une pression sur le compartiment principal afin de faire circuler le fluide du compartiment principal vers le compartiment secondaire ;
- Une fois le compartiment secondaire rempli, ouvrir l'ouverture 02 et distribuer le fluide par l'ouverture 02 du compartiment secondaire.

Ainsi, afin de distribuer une dose de fluide, l'utilisateur applique une pression sur le compartiment principal. La souplesse de la poche ainsi que la structure particulière de la ligne de soudure permettent sous cette sollicitation la circulation du fluide du compartiment principal vers le compartiment secondaire. Une fois que le volume de compartiment secondaire est rempli, l'utilisateur peut relâcher la pression exercée sur le compartiment principal. Le fluide contenu dans le compartiment secondaire ne repasse pas dans le compartiment principal même en l'absence de la pression appliquée sur le compartiment principal. L'utilisateur peut ensuite ouvrir l'ouverture 02 du compartiment secondaire et verser la dose du fluide.

La figure 1 représente une vue selon le plan (XY) d'un dispositif de distribution d'une dose d'un fluide selon un mode de réalisation.

La figure 2 représente une vue selon le plan (XY) d'un dispositif de distribution d'une dose d'un fluide selon un autre mode de réalisation.

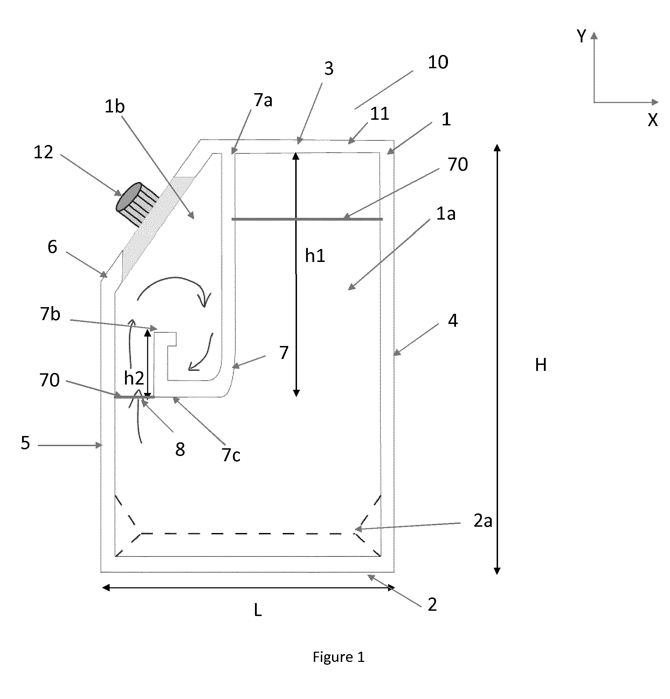

La figure 1 représente une vue selon le plan (XY) d'un dispositif de distribution 10 d'une dose d'un fluide dont le niveau 70 est représenté , le dit dispositif comprenant une poche souple 1 d'une hauteur H et d'une largeur L ayant une base 2, une extrémité 3 et trois côtés 4, 5, 6.

La poche comprend deux feuilles polygonales réalisées en un film multicouche ou un film coextrudé. Les feuilles sont soudées entre elles par la base, les côtés latéraux 4, 5, 6 et par l'extrémité de la poche.

L'extrémité de la poche est représentée fermée hermétiquement (par soudure) sur la figure 1 car le fluide à délivrer a été préalablement introduit dans la poche par l'ouverture 11 de l'extrémité de la poche 1.

Selon ce mode de réalisation, la base est formée d'un soufflet 2a afin de faciliter la pose du dispositif sur un support.

Ladite poche souple 1 comprend un compartiment principal 1a et un compartiment secondaire 1b présentant un volume inférieur à celui du compartiment principal 1a. Le compartiment secondaire 1b comprend une ouverture fermée hermétiquement par un bouchon 12.

Le compartiment secondaire 1b est délimité du compartiment principal 1a par une ligne de soudure 7 permettant la circulation du fluide du compartiment principal vers le compartiment secondaire (représenté par les flèches sur la figure 1) lorsqu'une pression exercée sur le compartiment principal 1a.

En effet, la ligne de soudure 7 comprend un bord supérieur 7a en contact avec l'extrémité 3 et un bord inférieur 7b correspondant au bord libre de la ligne de soudure qui n'est pas en contact avec le côté 5 de la poche 1 formant un orifice 8 entre le coté 5 et le bord libre 7b. La ligne de soudure 7 comprend également une partie proximale 7c par rapport à la base se présentant sous la forme d'une droite sensiblement parallèle à la base 2.

La distance séparant le bord supérieur 7a de la ligne de soudure et la partie proximale de la ligne de soudure 7c par rapport à la base est représenté par la hauteur h1.

La distance séparant le bord libre 7b de la ligne de soudure et la partie proximale de la ligne de soudure 7c par rapport à la base est représenté par la hauteur h2.

Selon ce mode de réalisation, le bord libre 7b est situé au-dessus de la zone proximale par rapport à la base 7c.

Dans le mode de réalisation de la figure 1, la ligne de soudure est continue. Lorsqu'une pression est exercée sur le compartiment principal 1a, le fluide passe du compartiment principal 1a vers le compartiment secondaire 1b par l'orifice 8 d'une largeur L_{orifice} crée par le fait que le bord inférieur 7b de la ligne de soudure 7 ne soit pas en contact avec le coté 5.

Puis, une fois le compartiment secondaire 1b entièrement rempli par le fluide, le bouchon 12 peut être dévissé afin de délivrer la dose du fluide du compartiment 1b.

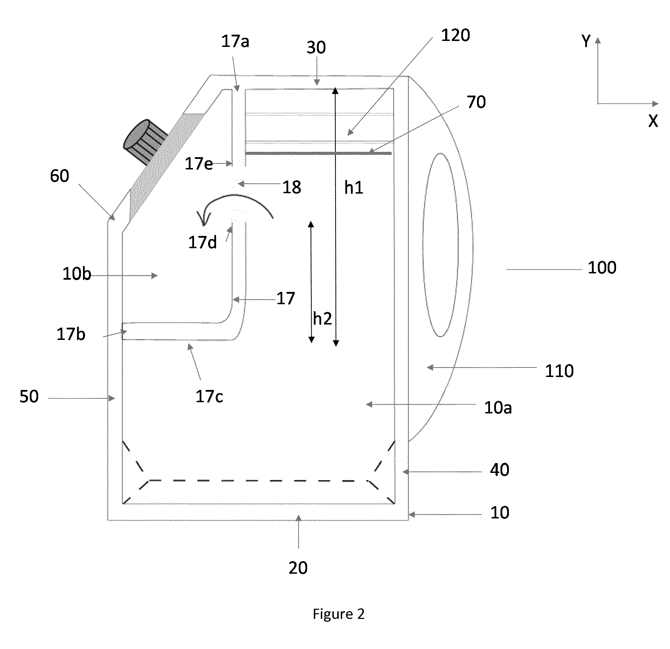

La figure 2 représente un dispositif de distribution décrit dans la figure 1 mais présentant une ligne de soudure ayant une configuration différente.

La figure 2 est donc une vue selon le plan (XY) d'un dispositif de distribution 100 d'une dose d'un fluide dont le niveau 70 est représenté, ledit dispositif comprenant une poche souple 10 ayant une base 20, une extrémité 30 et trois côtés latéraux 40, 50, 60.

L'extrémité de la poche est représentée fermée hermétiquement (par un système de zip 120) car le fluide à délivrer a été préalablement introduit dans la poche par l'ouverture (non représentée) de l'extrémité supérieure 30 de la poche 100.

Ladite poche souple 100 comprend un compartiment principal 10a et un compartiment secondaire 10b présentant un volume inférieur à celui du compartiment principal 10a.

Le compartiment secondaire 10b est délimité du compartiment principal 10a par une ligne de soudure 17 permettant la circulation du fluide du compartiment principal vers le compartiment secondaire 10b (représenté par les flèches sur la figure 2) par une pression exercée sur le compartiment principal 10a.

Dans le mode de réalisation de la figure 2, la ligne de soudure 17 est discontinue et présente un bord libre proximal 17d et un bord libre distal 17e définissant un orifice 18 d'une largeur L_{orifice} afin de permettre la circulation du fluide du compartiment principal 10a vers le compartiment secondaire 10b lorsqu'une pression est exercée sur le compartiment principal 10a (représenté par la flèche sur la figure 2).

Dans ce mode de réalisation, les extrémités supérieure 17a et inférieure 17b de la ligne de soudure sont en contact respectivement avec l'extrémité 30 et le côté 50 de la poche.

La ligne de soudure 17 comprend également une partie proximale 17c par rapport à la base se présentant sous la forme d'une droite sensiblement parallèle à la base 20.

La distance séparant le bord supérieur 17a de la ligne de soudure et la partie proximale de la ligne de soudure 17c par rapport à la base est représenté par la hauteur h1.

La distance séparant le bord libre 17d proximale de la ligne de soudure par rapport à la base et la partie proximale de la ligne de soudure 17c par rapport à la base est représenté par la hauteur h2.

Selon ce mode de réalisation, le bord libre 17d est situé au-dessus de la zone proximale par rapport à la base 17c.

Dans le mode de réalisation de la figure 2, la ligne de soudure est discontinue. Lorsqu'une pression est exercée sur le compartiment principal 10a, le fluide passe du compartiment principal 10a vers le compartiment secondaire 10b par l'orifice 18 d'une largeur L_{orifice}.

Le dispositif de distribution 100 comprend en outre une poignée 110 solidaire du coté 40 afin de pouvoir manipuler aisément le dispositif de l'invention.

Le dispositif de la présente invention permet donc de délivrer simplement et en toute sécurité une dose d'un fluide sans avoir recours à des accessoires supplémentaires.

## Revendications

1. Dispositif de distribution d'une dose d'un fluide comprenant une poche souple destinée à contenir le fluide, ladite poche souple :
- étant définie en coupe longitudinale par une base, une extrémité supérieure opposée à la base et au moins deux côtés latéraux, et
- comprenant un compartiment principal, ledit compartiment principal présentant un volume V1 et une ouverture O1 permettant d'introduire le fluide dans le compartiment principal et un compartiment secondaire, ledit compartiment secondaire présentant un volume V2 inférieur au volume V1 et une ouverture 02 permettant de délivrer le fluide du compartiment secondaire,
le compartiment secondaire étant séparé du compartiment principal par une ligne de soudure présentant une partie proximale par rapport à la base de la poche et au moins un bord libre, ladite ligne de soudure permettant de faire communiquer le fluide du compartiment principal vers le compartiment secondaire par une pression exercée sur le compartiment principal puis de maintenir ledit fluide dans le compartiment secondaire lorsqu' aucune pression n'est exercée sur le compartiment principal.

2. Dispositif de distribution selon la revendication 1, **caractérisé en ce que** :
- la ligne de soudure a un bord supérieur en contact avec l'extrémité supérieure de la poche et un bord inférieur en contact avec un côté de la poche ; et
- la ligne de soudure est discontinue et présente un bord libre distal par rapport à la base et un bord libre proximal par rapport à la base, les deux bords libres définissant un orifice d'une largeur L_{orifice} permettant la circulation du fluide du compartiment principal vers le compartiment secondaire lorsqu'une pression est appliquée sur le compartiment principal.

3. Dispositif de distribution selon la revendication 1, **caractérisé en ce que** :
- la ligne de soudure est continue, et
- la ligne de soudure a un bord supérieur et/ou un bord inférieur qui n'est pas en contact respectivement avec l'extrémité supérieure de la poche et/ou un côté de la poche formant ainsi au moins un orifice d'une largeur L_{orifice}, le bord libre de la ligne de soudure correspondant au bord supérieur et/ou à un bord inférieur de la ligne de soudure.

4. Dispositif de distribution selon la revendication 2 ou 3, **caractérisé en ce que** le bord libre est situé au-dessus de la partie proximale de la ligne de soudure par rapport à la base.

5. Dispositif de distribution selon l'une des revendications 2 à 4, **caractérisé en ce que** le ratio entre le bord supérieur de la ligne de soudure et la partie proximale de la ligne de soudure par rapport à la base (h1) et la distance séparant le bord libre de la ligne de soudure de la partie proximale par rapport à la base (h2) est compris entre 1,5 et 10.

6. Dispositif de distribution selon l'une des revendications précédentes, **caractérisé en ce que** l'orifice a une largeur comprise entre 2 mm et 40mm.

7. Dispositif de distribution selon l'une des revendications précédentes, **caractérisé en ce que** la poche est réalisé en un film monocouche, multicouche comprenant un matériau choisi dans le groupe consistant en le polypropylène, le polyester, le polyéthylène, le polyamide, l'aluminium (en feuille ou en paillette) et le papier kraft et leurs mélanges.

8. Dispositif de distribution selon l'une des revendications précédentes, **caractérisé en ce que** l'ouverture O1 du compartiment principal est dotée de moyens de fermeture.

9. Dispositif de distribution selon l'une des revendications précédentes, **caractérisé en ce que** le compartiment principal comprend un fluide et l'ouverture 02 du compartiment secondaire est dotée de moyens de fermeture.

10. Procédé de fabrication d'un dispositif de distribution d'un fluide comprenant les étapes consistant en :
(i) Fournir une poche définie en coupe longitudinale par une base, une extrémité supérieure opposée à la base et au moins deux côtés latéraux, la dite poche comprenant au moins une feuille; et
(ii) Réaliser une ligne de soudure dans la poche de l'étape (i) délimitant un compartiment principal ayant un volume V1 et une ouverture O1 et un compartiment secondaire ayant un volume V2 et une ouverture 02, la dite ligne de soudure présentant une partie proximale par rapport à la base de la poche et au moins un bord libre et permettant de faire communiquer le fluide du compartiment principal vers le compartiment secondaire par une pression exercée sur le compartiment principal puis de maintenir ledit fluide dans le compartiment secondaire lorsqu' aucune pression n'est exercée sur le compartiment principal.

11. Procédé de remplissage d'un fluide dans un dispositif de distribution comprenant les étapes consistant en :
- Fournir un dispositif de distribution selon l'une des revendications 1 à 9 ou fabriqué selon la revendication 10 ;
- Remplir la poche avec le fluide par l'ouverture O1 du compartiment principal;
- Fermer hermétiquement l'ouverture O1 du compartiment principal.
- Eventuellement fermer hermétiquement l'ouverture 02 du compartiment secondaire.

12. Procédé de distribution d'un fluide comprenant les étapes consistant en :
- Fournir un dispositif de distribution rempli selon la revendication 9 ou fabriqué selon le procédé de la revendication 11;
- Exercer une pression sur le compartiment principal afin de faire circuler le fluide du compartiment principal vers le compartiment secondaire ;
- Une fois que le compartiment secondaire est rempli, ouvrir l'ouverture 02 et distribuer le fluide à travers l'ouverture 02 du compartiment secondaire.
